Europäisches Patentamt

(19) European Patent Office

Office européen des brevets

(11) Publication number: **0 130 000**
**A2**

(12) # EUROPEAN PATENT APPLICATION

(21) Application number: **84303823.3**

(22) Date of filing: **06.06.84**

(51) Int. Cl.⁴: **H 04 L 11/16**

(30) Priority: **23.06.83 CA 431062**

(43) Date of publication of application:
**02.01.85 Bulletin 85/1**

(84) Designated Contracting States:
**AT DE FR GB IT NL SE**

(71) Applicant: **NORTHERN TELECOM LIMITED**
**1600 Dorchester Boulevard West**
**Montreal Quebec H3H 1R1(CA)**

(72) Inventor: **Geadah, Youssef Alfred**
**107 Craig Henry Drive**
**Nepean Ontario K2G 3S8(CA)**

(74) Representative: **Crawford, Andrew Birkby et al,**
**A.A. THORNTON & CO. Northumberland House 303-306**
**High Holborn**
**London WC1V 7LE(GB)**

(54) **Apparatus and method for controlling access by a plurality of units to a shared facility.**

(57) Units requiring access to a common facility, as for example a data transfer communication bus (200) in a TDM communications system, are controlled by ab access control system. The access control system includes a control bus (100) having n leads being rank ordered 1 through n and being discontinuous, each lead consisting of $2^n/2^x$ segments where x is the rank order number of the lead. Up to $2^n$ units are connected to the control bus, each via an access control circuit (20). Each access control circuit is responsive to an access request from its associated unit for asserting a predetermined unit address from an address source (110) on the control bus in wired OR configuration. When a unit detects its own address on the bus, access is provided by a driver circuit (27) which gates data from the unit onto the data transfer communications bus. A busy lead (102) and associated gating in each access control circuit implements a fair distribution of access among the units.

FIG. I

0130000

## APPARATUS AND METHOD FOR CONTROLLING ACCESS BY A
## PLURALITY OF UNITS TO A SHARED FACILITY

The invention is in the field of time division multiplex (TDM) communication apparatus, networks and methods, and is particularly concerned with arbitration or control of access to a common facility from among a plurality of units.

In the field of communication services there have been two separate and distinct communications requirements, that of voice communications and that of data communications. Voice communications have been traditionally provided by circuit switched communications facilities in distinction to data communications which have been traditionally provided by message or packet switched communications facilities. It is however commonplace to use circuit switching for data in the absence of the more efficient packet switching facility. In circuit switching a conversation between two parties is carried by a circuit assigned to the parties for the duration of the conversation. More recently in TDM circuit switching, the circuit may be shared with other conversations, the circuit being assigned to the conversations of the respective parties on a rotational periodic basis which typically defines 24 or 32 TDM channels. In packet switching there is no such periodic assignment of channels. A data message is provided with a circuit between a sender and a receiver only for the time required to transmit the message. The message includes a header portion for indicating an intended destination of data which follows the header. Often the destination is attainable by various transmission routes and subsequent messages from an originator and intended for the same destination may be carried by any of the routes. Hence such messages will arive at the destination having experienced wide variations in transit and intermediate node storage times. Packet switching has not so far gained acceptance as being practical for voice communications.

One example of a smaller data switching system is often referred to as a local area network (LAN). A LAN may have only one path for communications for which active ports in a population contend for access. Access is usually granted on the basis of the first port to establish transmission in the absence of a transmission attempt at another port. An alternate arrangement was discussed in a publication entitled "Distributed Scheduling Conflict-Free Multiple Access for Local Area Communication Networks" by Jon W. Mark in the IEEE Transactions on Communications, Vol. Com-28, No. 12, December 1980. In this publication contention or scheduling is described as being carried out by means of a slow speed sub-channel and guarantees each active port one transmission during each cycle. Another publication entitled "Distributed Broadcast Channel Access" by A.K. Mok and S.A. Ward discusses a system wherein dynamic priorities are assigned to up to $2^n - 2$ data bus connected processors for which access is arbitrated by consensus via n control leads. Another publication entitled "Waterloo Experimental Local Network (Welnet) Physical Level Design" by T.D. Todd and J.W. Mark discusses a system which uses a token passing ring arrangement to arbitrate bus access.

It is the object of the invention to provide a fair and flexible arbitration system whereby ports of a communications network are controlled to have regularly available access to a common data transfer bus.

A control bus in accordance with the invention is used for arbitrating access to a facility by unit locations of a plurality of up to $2^n$ unit locations. The control bus includes a plurality of n leads being rank ordered with integer numbers 1 through n, the nth lead being continuous throughout the control bus, and the leads 1 through n-1 each consisting of $2^n/2^x$ discontinuous segments, where x is the rank order number of the corresponding lead. A plurality of connection means provides for connections between up to a maximum of $2^n$ unit locations with at least one segment of each of the leads 1 through n - 1, and provides for connections between up to a maximum of $2^n$ unit locations with the nth lead.

An access control system in accordance with the invention includes the control bus and a plurality of up to a maximum of $2^n$ unit locations distributed along the control bus. A connection means is associated with each of the unit locations for providing connection for each unit location to each lead of the control bus such that up to a maximum of $2^x$ unit locations are connectable to any one of the segments and up to a maximum of $2^n$ unit locations are connectable to the nth lead of the control bus. Address circuits are used to provide a predetermined unit address for each of the unit locations. Each predetermined unit location address includes n binary bits being rank ordered in significance from 1 through n in correspondence with the leads of the control bus. The binary bits are arranged to have binary states such that in a group of unit locations being connected in common to any one segment of the control bus, the number of corresponding binary bits being of any one state is not in excess of $2^x/2$. An address assertion circuit is associated with each unit at the unit location. Each of the address assertion circuits includes gates for asserting the predetermined unit location address via the connection means in wired OR combination with respect to each of the segments and the nth lead. Address assertion occurs in response to an access requirement in the associated unit. An access gating circuit is associated with each of the units. Each access gating circuit is responsive to a match between the output states of the gates of a corresponding one of the address assertion circuits and the predetermined unit location address, for gating an information word from the unit location toward the common facility.

Example embodiments are discussed in the following with reference to the accompanying drawings in which:

Figure 1 is a block schematic diagram of an access control system in accordance with the invention;

Figures 2a and 2b are schematic diagrams of control buses suitable for use in figure 1;

Figure 3 is a schematic diagram of one example of a request logic circuit used in the access control system in figure 1;

Figure 4 is a graphical illustration of timing of various functions in the operation of the access control system illustrated in figures 1 and 3;

Figure 5 is a schematic diagram of another example of a request logic circuit used in an access control system in the access control system in figure 1; and

Figure 6 is a graphical illustration of timing of various functions in the operation of the access control system illustrated in figures 1 and 5.

Description of the Example Embodiment

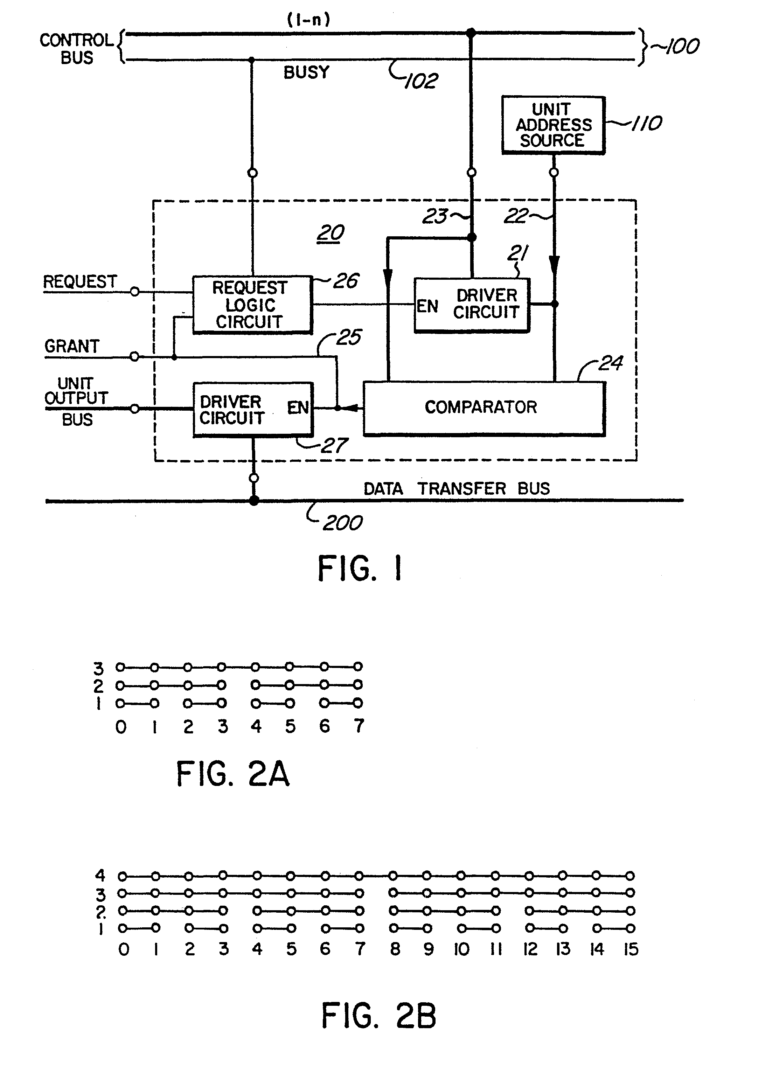

Referring to figure 1 a control bus 100 is connected to a plurality of access control circuits 20, only one of which is shown. The control bus 100 provides for an access control system which regulates access to a common facility. In this example, the common facility is a data transfer bus 200, to which by a plurality of units are to have controlled access. Each of the units is connected to a corresponding one of the access control circuits 20 via request and grant leads and a unit output bus. The control bus 100 includes control leads 1 through n and a busy lead 102. A source 110 of a unit address is connected via a bus 22 to inputs of a driver circuit 21 and to inputs of a comparator circuit 24. Outputs of the driver circuit 21 are connected to the leads 1 through n respectively and to inputs of the comparator circuit 24 via a bus 23. An output of the comparator circuit 24 is the origin of a grant lead 25. The output is connected via the grant lead 25 to an enable input EN of a driver circuit 27, and to an input of a request logic circuit 26. The request lead is also connected to an input of the request logic circuit 26. The request logic circuit 26 includes an output connected to an enable input EN of the driver circuit 21. The unit output bus is connected to inputs of a driver circuit 27 which includes outputs connected to the data transfer bus 200. The driver circuit 27 also includes an enable input EN connected to the grant lead 25.

An access control circuit as illustrated in figure 1 is connected at any one of unit location positions 0 through 7 in figure 2a. Each unit location position is associated with three terminals for providing the connection to leads 1 through 3, corresponding to the leads 1 through n in figure 1. Each of the leads except for the nth lead is discontinuous such that it consists of $2^n/2^x$ segments, where x is the identifying number of the lead. Each segment includes at most $2^x$ terminals. Figure 2b illustrates an expansion to four leads in the control bus.

6

The control bus 100 may be in any convenient form. It is particularly useful in a back plane or middle plane structure including an insulating substrate which carries the leads of the control bus and the data transfer bus for connection to circuit packages by any of various arrangements well known to persons skilled in hardware design of electronic telephone systems. The source of location address 110 although not shown in figures 2a and 2b may also be carried on the insulating substrate in association with each unit location. The source 110 is normally hard wire configured to provide binary signal states corresponding to the identity of the connection terminals of the unit location. However a register or the like may be used in combination or in substitution for the hard wire configured source to provide a readily alterable location address.

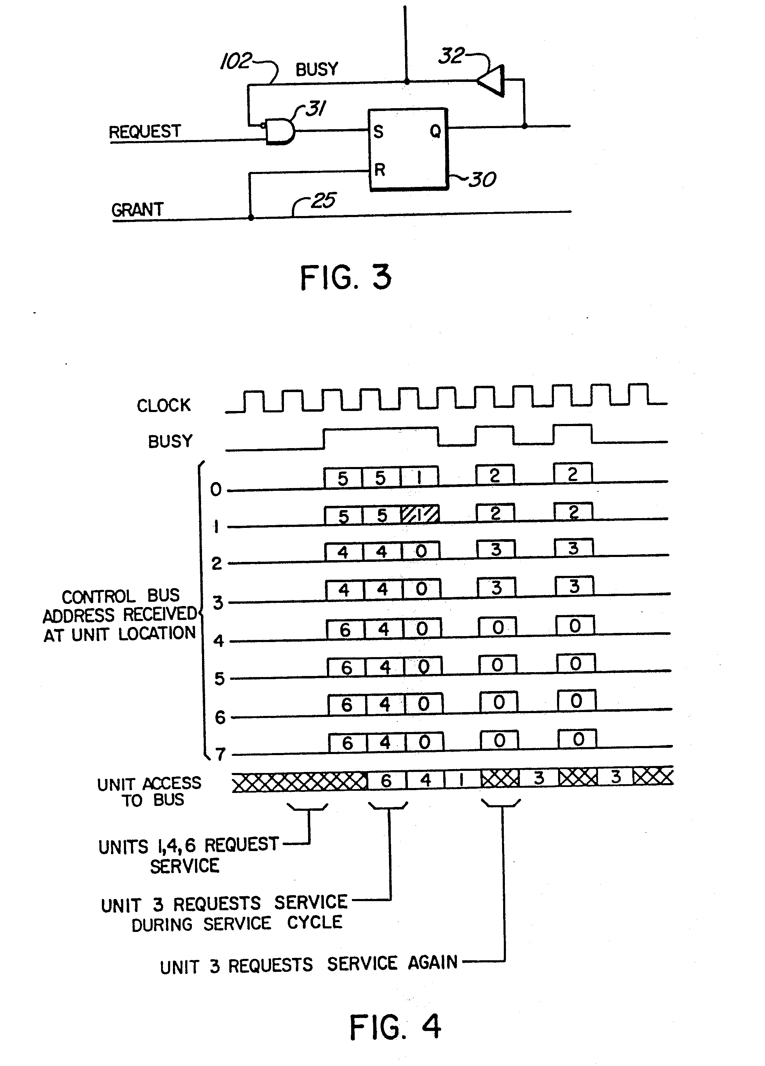

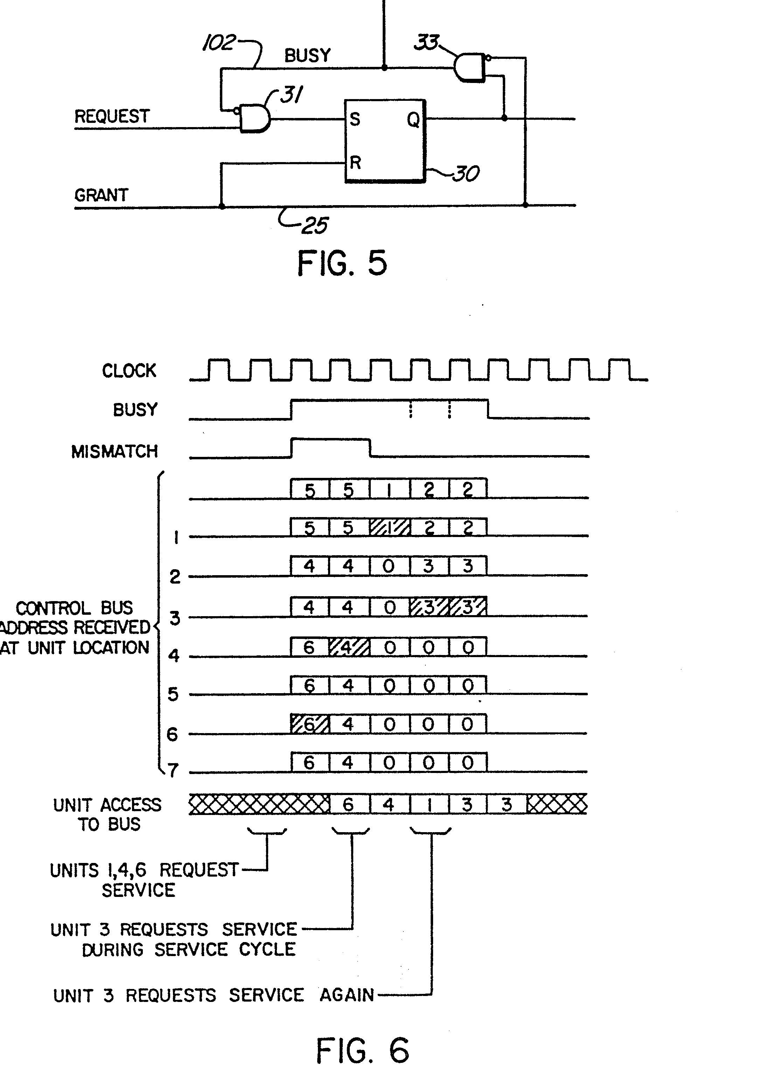

Two examples of a suitable request logic circuit 26 are illustrated in figures 3 and 5. Each of the examples includes a clocked set reset flip-flop 30 having a reset input R connected to the grant lead 25, a set input S connected to an output of an AND gate 31 and an output Q connected to the enable input of the driver circuit 21 in figure 1. The AND gate 31 includes an input connected to the request lead and an inverting input connected to the busy lead 102. In figure 3 a Q output of the flip-flop 30 is also connected to the busy lead via a buffer amplifier 32. In figure 5 the Q output of the flip-flop is connected also to an input of an AND gate 33 which includes an output connected to the busy lead 102 and an inverting input connected to the grant lead 25.

An illustration of a basic operation of the access control circuit 20 does not require the request logic circuit 26 or the busy lead 102, providing that the request lead is connected directly to the EN input of the drive circuit 21.

In operation the access control circuit 20 is coupled or lodged at a unit location so that the driver 21 is connected to the control bus leads 1, 2 and 3 as illustrated in figure 2a. Clock signal and power are distributed as required, but are not shown. Each of the access control circuits is responsive to a request asserted on the request lead by its associated unit to assert its unit location address on the leads 1 through 3 of the control bus. If and when the comparator 24 detects a match between the address on the leads 1 through 3 of the control bus and the address from the source 110, it asserts a grant signal which causes the driver 27 to assert data from the associated circuit unit onto the data transfer bus 200, and at the same time informs the associated circuit unit that it has obtained access to the common facility, in this case the bus 200. If the unit has more data to send, the request signal remains asserted, otherwise it becomes unasserted. Hence circuit units are granted access to the bus 200 on a priority basis, the highest address always having highest priority and the lowest address having the lowest priority.

However, as thus far described, fair access has not been achieved. Fair access is provided by including the busy lead 102 and the request logic circuit 26. In the event that a request has been asserted, the request is only registered in the flip-flop 30 via the AND gate 31 if the busy lead 102 is not asserted. If the busy lead 102 is asserted, this indicates that at least one other access control circuit is already waiting for access to the data transfer bus 200. When the busy lead 102 becomes unasserted all of the access control circuits respond to request signal assertions from their associated units by asserting their respective location addresses via their driver circuits 21 and a busy signal on the busy lead 102. Hence each of the access control circuits which have an access requirement at this instant are subsequently provided with access, before any further access requests are registered and serviced.

An exemplary sequence of functions of the access control circuit using the request logic circuit of figure 3 is illustrated in figure 4. During one clock tick or period it is assumed for purpose of illustration that circuit units 1, 4 and 6 each request service. In the next clock tick, each corresponding access control circuit asserts its unique location address onto leads 1 - 3 of the control bus, and also asserts a busy signal on the busy lead 102. Each access control unit receives an address during this and each subsequent clock tick as shown opposite the unit locations in figure 3. In the next clock tick, unit 6 gains access, in the next clock tick, unit 4 gains access, and so on until each initially requesting unit has been served.

In this example for illustration, unit 3 is shown to be making a request during the third mentioned clock tick. However as the busy lead 102 is asserted, in its corresponding access control unit the flip flop 30 does not register the request. When the busy lead becomes unasserted, the request is registered in the next clock tick by the flip-flop 30. In the following clock tick, unit 3 gains access to the data transfer bus 200 and at the same time a second request from unit 3 is registered. On the second following clock tick unit three again gains access to the bus 200.

Operation of the access control system in accordance with figures 1 and 3 provides a fair allocation of access to the bus 200 among all the circuit units, however at the expense of some lost access time.

This occurs because in order for an access request to be registered, the busy bus must be idle or unasserted. This may be of no practical significance in a large system, however in the absence of requests from other units one unit, which might advantageously be given full time access to the bus 200, is limited to access for only half of the time. This is illustrated in figure 4.

A further improved operation of the access control circuit is achieved with the use of the request logic circuit in figure 5. The primary difference between the circuit of figure 3 and figure 5 is that the busy lead 102 becomes asserted by the request logic circuit only during the presence of the registered request while the grant signal is unasserted. The moment an access control circuit generates the grant signal, the busy lead assertion is removed at the same clock tick, not in the following clock tick as was the case in the previous example. This improved operation is shown in figure 6 and is in contrast to the otherwise similar illustration of figure 4.

1.  A control bus (100) for use in regulating access to a facility by unit locations of a plurality of up to $2^n$ unit locations, the control bus comprising:

a plurality of n leads (Fig. 2A or Fig. 2B) being rank ordered with integer numbers 1 through n, the nth lead being continuous throughout the control bus, and the leads 1 through n-1 each consisting of $2^n/2^x$ discontinuous segments, where x is the rank order number of the corresponding lead;

a plurality of connection means (0 - 7 or 0 - 15) for providing a plurality of connections between up to a maximum of $2^x$ unit locations and at least one segment of each of the leads 1 through n - 1, and for providing connection between up to a maximum of $2^n$ unit locations and the nth lead.

2.  A control bus as defined in claim 1 wherein the leads 1 through n are carried on a substrate.

3.  A control bus as defined in claim 2 wherein each segment includes $2^x$ land areas and the nth lead includes $2^n$ land areas, each of the land areas providing for an electrical contact with a one of the plurality of connection means.

4.  A control bus as defined in claim 1, including at least an n + 1 lead (102) being continuous throughout the control bus, and the plurality of connection means also being for providing a plurality of connections between up to a maximum of $2^x$ unit locations and at least the n + 1 lead.

5. A control bus as defined in claim 2, including at least an n + 1 (102) lead being continuous throughout the control bus, and the plurality of connection means also being for providing a plurality of connections between up to a maximum of $2^x$ unit locations and at least the n + 1 lead.

6. A control bus as defined in claim 3, including at least an n + 1 lead (102) being continuous throughout the control bus, and the plurality of connection means also being for providing a plurality of connections between up to a maximum of $2^x$ unit locations and at least the n + 1 lead.

7. An access control system for regulating access of a plurality of units to a common facility, (200) comprising:

a control bus (100) having a plurality of n leads (Fig. 2A or Fig. 2B) being rank ordered with integer numbers 1 through n, the nth lead being continuous throughout the control bus, and the leads 1 through n - 1 each consisting of $2^n/2^x$ discontinuous segments, where x is the rank order number of the corresponding lead;

a plurality of up to a maximum of $2^n$ unit locations being distributed along the control bus, each unit location being for connection to a one of the units to the common facility;

connection means (0 - 7 or 0 - 15) being associated with each of the unit locations for providing connection for each unit location to each lead of the control bus such that up to a maximum of $2^x$ unit locations are connectable to any one of the segments and up to a maximum of $2^n$ unit locations are connectable to the nth lead of the control bus;

address means (110) for providing a predetermined unit address for each of the unit locations, each predetermined unit location address including n binary bits being rank ordered in significance from 1 through n in correspondence with the leads of the control bus, the binary bits being arranged to have binary states such that in a group of unit locations being connected in common to any one segment of the control bus, the number of corresponding binary bits being of any one state is not in excess of $2^x/2$;

a plurality of address assertion means (21) being associated with respective units at unit locations, each of the address assertion means including gates for asserting the predetermined unit location address via the connection means in wired OR combination with respect to each of the segments and the nth lead, in response to an access requirement in the unit; and

a plurality of access gating means (24, 27), each of the access gating means being responsive to a match between the output states of the gates of a corresponding one of the address assertion means and the predetermined unit location address for gating an information word from the unit location to the common facility.

8. An access control system as defined in claim 7 wherein the control bus includes a busy lead (102) and at each of the plurality of unit locations the access control system further comprises registering means (26) for temporarily storing an access requirement in response to indication of an access requirement occurring while the busy lead is in an idle state and for asserting a busy state on the busy lead through a duration of the temporary storage, the registering means being reset to cancel the temporarily stored request after a time period of access in response to each occurrence of said match between the output states of the gates of the corresponding one of the address assertion means and the predetermined unit location address.

9. An access control system as defined in claim 8 wherein the state of each of the registering means is wire ORed on the busy lead.

10. An access control system as defined in claim 8 wherein the output of each register means is connected to a gating means (33) havingan output being wire ORed to the busy lead, the gating means being responsive to a temporarily stored request in the registering means in the absence of the match between the predetermined unit location address and the output states of the address assertion means for asserting a busy signal on the busy lead.

11. An access control circuit (20) for use in an access control system including a plurality of access control circuits all being connected to an access control bus (100) , for regulating access of associated units to a shared facility, the access control circuit comprising:

first means (21, 26) for asserting a unit address on the access control bus in response to a request for access signal from the unit;

second means (24) for detecting a match between lead states of the access control bus and the unit address; and

third means (27) for gating signals from the associated unit to the shared facility for a period of time in response to detection of a match by the second means.

12. An access control circuit as defined in claim 11, wherein the first means comprises:

register means (30) for temporarily storing the request for access signal;

a first gate (31) for gating the request for access signal tothe register means in the absence of a busy signal; and

fourth means (32) for asserting a busy signal for wired OR combination with the others of the access control circuits in response to a temporarily stored request for access signal.

13. An access circuit as defined in claim 12 wherein the fourth means includes gating means (33) being responsive to the detection of a match by the second means for blocking the assertion of the busy signal at the fourth means.

14. A method for controlling access of a plurality of up to n units at corresponding unit locations to a shared facility (200) comprising the steps of:

a) having a plurality of n leads being rank ordered with integer numbers 1 through n in a control bus (100), the nth lead being continuous throughout the control bus and the leads 1 through n - 1 each consisting of $2^n/2^x$ discontinuous segments, where x is the rank order number of the corresponding lead;

15

b) having a plurality of connection means (0 - 7 or 0 - 15) for providing a plurality of connections between up to a maximum of $2^x$ unit locations and at least one segment of each of the leads 1 through n-1, and for providing connection between up to a maximum of $2^n$ unit locations and the nth lead;

c) asserting a corresponding unit address on the control bus in response to each unit requiring access to the shared facility; and

d) in response to the state of the control bus corresponding to the unit address, coupling signals from the unit to the shared facility to provide said access.

15. A method as defined in claim 14 further comprising the step of having an n + 1 lead (102) being continuous throughout the control bus and wherein step (c) includes temporarily storing a requirement of access at a moment when the n + 1 lead is unasserted and thereafter asserting a busy signal on the lead until the access is provided.

0130000

FIG. 1

FIG. 2A

FIG. 2B

FIG. 3

CLOCK

BUSY

CONTROL BUS
ADDRESS RECEIVED
AT UNIT LOCATION

UNIT ACCESS
TO BUS

UNITS 1,4,6 REQUEST
SERVICE

UNIT 3 REQUESTS SERVICE
DURING SERVICE CYCLE

UNIT 3 REQUESTS SERVICE AGAIN

FIG. 4

0130000

FIG. 5

FIG. 6